(19) **Europäisches Patentamt**
**European Patent Office**
**Office européen des brevets**

(11) **EP 4 685 700 A1**

(12) **EUROPEAN PATENT APPLICATION**

(43) Date of publication:
**28.01.2026 Bulletin 2026/05**

(21) Application number: **24190729.4**

(22) Date of filing: **24.07.2024**

(51) International Patent Classification (IPC):
**G06N 3/0464** (2023.01)    **G06N 3/084** (2023.01)
**G06N 3/096** (2023.01)    **G06N 10/60** (2022.01)

(52) Cooperative Patent Classification (CPC):
**G06N 3/0464; G06N 3/084; G06N 3/096;**
**G06N 10/60**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Terra Quantum AG**
**9000 St. Gallen (CH)**

(72) Inventors:
• **MELNIKOV, Alexey**
**9000 St. Gallen (CH)**

• **KUZMIN, Viacheslav**
**9000 St. Gallen (CH)**
• **TARPANOV, Daniil**
**9000 St. Gallen (CH)**
• **SAGINGALIEVA, Asel**
**9000 St. Gallen (CH)**

(74) Representative: **Lucke, Andreas**
**Boehmert & Boehmert**
**Anwaltspartnerschaft mbB**
**Pettenkoferstrasse 22**
**80336 München (DE)**

(54) **METHOD AND SYSTEM FOR ADAPTING A PRE-TRAINED MACHINE LEARNING MODEL TO A LEARNING TASK**

(57) A computer-implemented method for adapting a pre-trained machine learning model to a learning task, comprising receiving the pre-trained machine learning model comprising a plurality of learned weights for transforming an input towards an output, wherein the plurality of learned weights can be expressed with a weight matrix; performing a training process for adapting the pre-trained machine learning model to the learning task by updating a task-specific parameter increment added to the weight matrix, which is constructed from an MPO representation with a plurality of tensors each having an uncontracted first and second index, and a contracted index of a bond dimension, wherein a product of dimensions of the uncontracted first and second indices of the tensors are at least equal to a first dimension and a second dimension of the weight matrix, respectively, and wherein entries of the tensors are trainable parameters of the training process.

Fig. 2A

**(Cont. next page)**

EP 4 685 700 A1

Fig. 2B

Fig. 2C

## Description

FIELD OF THE DISCLOSURE

The present disclosure is in the field of machine learning. In particular, the present disclosure relates to adapting a pre-trained machine learning model to a new or more specific learning task.

BACKGROUND

Many applications in machine learning, such as natural language processing, rely on adapting one large-scale, pre-trained language model to multiple downstream applications. Such adaptation is usually done via fine-tuning, which updates all the parameters of the pre-trained model to perform better for one of the downstream applications. The major downside of fine-tuning is that the fine-tuned model has as many training parameters as in the original model. As larger models are pre-trained, full fine-tuning, which retrains all model parameters, becomes less feasible, both in terms of training time as well as energy expenditure.

Hu et al. (LORA: Low-Rank Adaptation of Large Language Models) proposed a low-rank decomposition of an accumulated gradient update during adaptation into two low-rank matrices, which can be multiplied to obtain a low intrinsic dimension update to a weight matrix of a pre-trained transformer model. During the fine tuning, only the entries of the two low-rank matrices are adjusted, such that the transformer model is tuned towards solving a specific task.

SUMMARY OF THE DISCLOSURE

Despite the advances in the field of fine tuning, given the increasing size of current machine learning models, weight adaption can still require significant energy expenditure in the form of computational cost, based in part on the requirement to adjust a large number of parameters representing the update to the machine learning model. For example, large language models currently feature more than 175 billion weights which are trained during the training on a large database on training data. Moreover, for some specific learning tasks, the available amount of data points may be small, such that the accuracy of the fine-tuned model adapted with conventional fine-tuning techniques may be limited.

The inventors found that the structure of quantum circuits, which can perform well at fitting global features in a parameter space, can be advantageously used to select an effectively small number of updates to adapt a machine learning model to a specific task, in particular when the sample size for the specific task is low. In analogy to common tensor techniques used in quantum information theory, an effectively sparse update matrix with a small intrinsic dimension can often be represented with a matrix product operator of a low rank, and it was found that the geometry of a matrix product operator can indeed provide updates with a low number of trained parameters during fine tuning while providing high accuracy for the learning task. Such a matrix product operator may further be directly implemented as a quantum circuit, such that the technique can be extended towards quantum hardware, as shown by Ter-manova et al. ("Tensor Quantum Programming"). Moreover, the Inventors found that parameters obtained directly through a controlled evolution of quantum systems can favorably reduce the parameter space, as part of a "quantum regularized" fine tuning.

As a result, the task of machine learning model adaption can be solved more efficiently, particularly when the amount of training data is small, and/or with expending lower processing power.

The present disclosure provides corresponding methods and a system for adapting a pre-trained machine learning model as set out in the appended independent claim. Examples thereof are detailed in the dependent claims.

According to a first aspect, a computer-implemented method for adapting a pre-trained machine learning model to a learning task is provided. The method comprises receiving the pre-trained machine learning model, the pre-trained machine learning model comprising a plurality of learned weights for transforming an input of the pre-trained machine learning model towards an output of the pre-trained machine learning model, wherein the plurality of learned weights can be expressed with a weight matrix $W_0$ having a first dimension and a second dimension. The method further comprises performing a training process for adapting the pre-trained machine learning model to the learning task by updating a task-specific parameter increment $\Delta W$ added to the weight matrix $W_0$ while leaving the parameters of the weight matrix $W_0$ fixed. The task-specific parameter increment $\Delta W$ is constructed from a matrix product operator, MPO, representation with a plurality of tensors each having an uncontracted first index, an uncontracted second index, and a contracted index of a bond dimension d, and a product of dimensions of the uncontracted first indices and of dimensions of the uncontracted second indices of the tensors are at least equal to the first dimension and the second dimension of the weight matrix $W_0$, respectively. The entries of the tensors are trainable parameters of the training process.

The learning task may be a part of a fine tuning of the pre-trained machine learning model, where the pre-trained machine learning is adapted to a specific task. To adapt the pre-trained machine learning model, which has been trained on a set of original training data for an original task, to specific targets, the effective weights can be adapted to improve solving the learning task based on the task-specific parameter increment $\Delta W$, which can be based on an effectively lower number of trainable parameters than the parameters of the wight matrix. Usually, the learning task is defined based on a smaller number of points of training data than the original task. Examples of such learning tasks in the field of large language models are style transfer, domain adaptation, task specialization, behavioral and ethical adjustments and content personalization. However, the adaption of the pre-trained machine learning model is not limited to this field, but instead can pertain to any weight adaption of a pre-trained machine learning model to improve solving a learning task, which is usually related to the original task, such as a more specific task.

The weight matrix can be an arrangement of the learned weights of the pre-trained model in the shape of a matrix. In some examples, the dimensions of the weight matrix conform to the input and output dimensions of the machine learning model. For a machine learning model, the learned weights may be arranged in a plurality of layers, which may be used to process an input in parallel or sequentially. For example, in a large language model based on a transformer architecture, different layers may be trained to "pay attention" to different features of the input, and each transformer layer may feature a plurality of weight matrices, e.g. a plurality of query, key, value, and output projection matrices in a self-attention module. Each of these matrices may be considered as a weight matrix to be adapted, or all of the matrices of a self-attention module may be combined/considered to constitute a weight matrix. In some examples, only a subset of the matrices, e.g. the query and value projection matrices are adapted during fine-tuning of a large language model. Different matrices of the machine learning model may be fine-tuned in parallel, and the method may be applied to a plurality of weight matrices of a pre-trained machine learning model, e.g. to provide a corresponding plurality task-specific parameter increments $\Delta W$ associated with the respective weight matrices.

For the fine tuning, the learned weights $W_0$ of the pre-trained machine learning model are kept fixed, and the training algorithm instead searches for an optimal set of task-specific parameter increments $\Delta W$, which should effectively contain a (significantly) smaller number of trainable parameters than the number of the learned weights. During the training, the task-specific parameter increments $\Delta W$ is added to the weight matrix $W_0$, such that the input is processed according to an effective weight matrix

$$W = W_0 + \Delta W.$$

The training algorithm can update the task-specific parameter increment $\Delta W$ according to an optimization algorithm which optimizes the task-specific parameter increment $\Delta W$ to reduce a loss when the pre-trained machine learning model is applied to the learning task. The task-specific parameter increment $\Delta W$ is constructed from a tensor network composed of a plurality of tensors in the form of a matrix product operator:

$$H_{MPO} = A[1]_{1\,\alpha_1}^{s_1 l_1} A[2]_{\alpha_1,\,\alpha_2}^{s_2 l_2} \dots A[n]_{\alpha_{n-1},1}^{s_n l_n}$$

wherein A[1], A[2], ..., A[n], are n tensors of the matrix product operator $H_{MPO}$ with $\alpha_1$-$\alpha_{n-1}$ as contracted indices, and $s_1$-$s_n$ and $l_1$-$l_n$ as first uncontracted indices and second uncontracted indices of the respective tensors A[1], A[2], ..., A[n], respectively. The MPO can be considered as a tensor train (TT) representation for the task-specific parameter increment $\Delta W$. The tensors of the matrix product operator may have one or two contracted indices, such as a single contracted index for the two tensors A[1], A[n] at the ends of the matrix product operator, and two contracted indices for the tensors arranged between the two tensors at the ends of the matrix product operator A[2]-A[n-1].

The entries of the tensors are the trainable parameters of the training process, in particular all entries of the tensors, and the number of trainable parameters updated in the training process can be smaller than the number of learned weights. The matrix product operator representation may be used to construct a low rank matrix as the task-specific parameter increment $\Delta W$.

In some examples, the number of tensors in the matrix product operator is greater than two.

Usually, the matrix product operator comprises three or more, four or more, or five or more tensors arranged in a tensor train of four-index (four-dimensional) tensors. The dimensions of the first and last tensors in the tensor train may be three, while any of the uncontracted indices $s_i$, $l_i$ should have a non-trivial dimension, e.g. two or more, such as three or more. The dimension of the contracted indices $\alpha_1$-$\alpha_{n-1}$ may be the same, and may be selected as a common bond dimension d, which may be greater than one, such as two or more, or three or more. However, in some examples, the bond dimension d is the largest dimension of the contracted indices $\alpha_1$-$\alpha_{n-1}$, and the dimensions of the contracted indices $\alpha_1$-$\alpha_{n-1}$ may be different.

In some examples, the bond dimension is smaller than the first dimension and the second dimension by at least an order of magnitude.

For example, when the first dimension and the second dimension of the weight matrix are greater than 100, the bond dimension may be smaller than 10, such as between 2 and 10.

Similarly, the dimensions of the uncontracted first indices and of dimensions of the uncontracted second indices of the tensors may each be smaller than the first dimension and the second dimension by at least an order of magnitude. Generally, the dimensions of the uncontracted first indices and of dimensions of the uncontracted second indices may be selected based on a factorization of the first dimension and the second dimension, and the uncontracted first indices and the uncontracted second indices may together point at corresponding rows and columns of the weight matrix, respectively.

In some examples, the dimensions of the uncontracted first indices and uncontracted second indices of the tensors are a factorization of the dimensions of rows and columns of the weight matrix $W_0$, respectively.

For example, a weight matrix with first and second dimensions of 300 (rows) and 400 (columns), respectively, may be represented with a matrix product operator comprising five tensors with uncontracted first indices of dimension 2, 5, 5, 3, 2 and uncontracted second indices of dimensions 2, 5, 5, 4, 2, wherein a combination of the (five) uncontracted first index values may index one of the rows of the weight matrix, and a combination of the (five) uncontracted second index values may index one of the columns of the weight matrix.

In some examples, each row and each column of the weight matrix $W_0$ is mapped to a value combination for the first uncontracted indices and second uncontracted indices of the matrix product operator, MPO, respectively.

Thus, the task-specific parameter increment may be represented with a matrix product operator, with several comparatively smaller tensors arranged in a tensor network. Each of the dimensions of the first indices and the second first indices, may be at least two. The dimensions of the first indices and/or of the second first indices of the tensors may be different.

In some examples, the first and second dimensions of the weight matrix $W_0$ correspond to row and column dimensions, respectively.

Using the matrix product operator to represent task-specific parameter increments $\Delta W$ for a weight matrix W which has significantly more trainable parameters than the entries of the tensors of the matrix product operator, e.g. at least by an order of magnitude, was found in experiments by the Inventors to provide improved accuracy over matrix factorization (e.g. as used in LORA) when the number of training data points is comparatively low. This compression technique originated from quantum information theory, but appears to also provide benefits in the approximation of an optimal update to a large parameter space of the weights of a (large) machine learning model, indicating that the task-specific parameter increments $\Delta W$ based on the matrix product operator structure may better generalize information for the fine tuning with few effective trainable parameters.

The skilled person will appreciate that the matrix product operator representation will be stored as a number of entries in a machine-readable storage in practice, and the shape of the tensors may merely underly the construction of the task-specific parameter increment $\Delta W$ in practice, e.g. through the application of an (implicit) contraction rule for constructing the entries of the task-specific parameter increment $\Delta W$.

As a starting point for the training process, the entries of at least one of the tensors may be set to zero, such that the training process effectively starts from the unmodified learned weights of the pre-trained machine learning model. In some examples, a plurality of tensors are initialized with entries of value "zero". Alternatively, a single tensor may be initialized with the entries having the "zero" value. The other tensors may be initialized with randomly selected values, e.g. based on a Gaussian distribution.

Additionally or alternatively, quantum circuits may be directly used to generate weights for the task-specific parameter increments $\Delta W$, e.g. to implement a form of "quantum" regularization of the available update space.

In some examples, the weights of at least one of the tensors of the plurality of tensors are determined based on an output of a variational quantum circuit. The variational quantum circuit is parametrized by a plurality of variational parameters, the variational parameters quantifying an action of variational quantum gates of the variational quantum circuit on a plurality of qubits, and the output of the variational quantum circuit is obtained based on a measurement result of measuring a state of the qubits.

In a second aspect, a computer-implemented method for adapting a pre-trained machine learning model to a learning task is provided. The method comprises receiving the pre-trained machine learning model, the machine learning model comprising a plurality of learned weights for transforming an input of the machine learning model towards an output of the machine learning model, wherein the plurality of learned weights can be expressed with a weight matrix $W_0$ having a first dimension and a second dimension. The method further comprises performing a training process for adapting the pre-trained machine learning model to the learning task by updating a task-specific parameter increment $\Delta W$ added to the weight matrix $W_0$ while leaving the parameters of the weight matrix $W_0$ fixed. The task -specific parameter increment $\Delta W$ is obtained from a product of a first low rank weight matrix and a second low rank weight matrix, wherein the weights of the first low rank weight matrix are determined based on an output of a variational quantum circuit. The variational quantum circuit is parametrized by a plurality of variational parameters, the variational parameters quantifying an action of variational quantum gates of the variational quantum circuit on a plurality of qubits, and the output of the variational quantum circuit is obtained based on a state of the qubits after applying the variational quantum circuit. The first low rank weight matrix has the first dimension and a first low-rank dimension smaller than the second dimension, and wherein the second low rank weight matrix has the second dimension and a second low-rank dimension smaller than the first dimension, and the training process updates the variational parameters of the variational quantum circuit.

The output of the variational quantum circuit may be used to generate trainable parameters of a matrix replacing one of the matrices in a LoRA scheme, which can multiplied as part of a matrix product for recovering a task -specific parameter increment $\Delta W$ of the same shape as the weight matrix $W_0$. In some examples, the output of the variational quantum circuit is obtained based on a measurement result of the state of the qubits, e.g. by measuring the state of the qubits and recording the outcomes to construct probabilities of the qubits being in a certain state.

In some examples, the method comprises obtaining a plurality of outputs of a corresponding plurality of variational quantum circuits with different variational parameters, and wherein the plurality of outputs are combined to form the first low rank weight matrix.

For example, a plurality of variational quantum circuits may be executed sequentially and/or in parallel, and the output of the plurality of variational quantum circuits may be measured to determine a respective plurality of trainable parameters, e.g. as part of a sub-matrix of the first low rank weight matrix having the first low-rank dimension. The sub-matrices determined based on the measured outputs of the different variational quantum circuits may be concatenated to form the first low rank weight matrix.

In some examples, the number of qubits is equal to the first low-rank dimension of the first low-rank weight matrix.

In some examples, the second low rank weight matrix is initialized to all zeros.

The first low rank weight matrix may be initialized randomly, e.g. based on a random selection of variational parameters. The product of the first and second low rank weight matrices may still be zero, such that the initial state of the training may be equal to the pre-trained machine learning model. The entries of the first low-rank weight matrix and the second low rank weight matrix may subsequently be updated to adapt the pre-trained machine learning model to the learning task.

In some examples, entries of the second low rank weight matrix are trainable parameters of the training.

The second low rank weight matrix may be updated similarly to a LoRA model adaption scheme, while the first low rank weight matrix may be updated by adjusting the variational parameters, e.g. using gradient based optimization algorithms, such as stochastic gradient descent or adaptive moment estimation, or gradient free optimization, such as simulated annealing. The product of the first low rank weight matrix and the second low rank weight matrix may be constrained to a subset of the available parameter space due to the definition of the variational quantum circuit(s), which may induce a sort of quantum regularization on the entries of the first low rank weight matrix.

In some examples, the first dimension is the dimension of the input.

In some examples, the method comprises executing the variational quantum circuit on quantum hardware.

A quantum computer generally encodes information in so called qubits, acting as a quantum mechanical equivalent of classical bits. Qubits are physical systems whose quantum mechanical state can be (coherently) controlled and (substantially) preserved between two basis states during the time of a computation, in the following referred to as |0> and |1>. As an example, a qubit may be implemented by encoding information in the spin state of an electron, e.g. in the electron being in an "up" state or a "down" state, but may also be encoded in a polarization state of a photon, in states of a (superconducting) oscillator, in energy levels of an atom, or the like.

Control operations on these qubits are termed Quantum gates. Quantum gates can coherently act on qubits for inducing changes of the state of a single qubit (so called single-qubit gates) and for acting on multiple qubits (so called multi-qubit gates), e.g. to entangle the states of the multiple qubits, and any combination thereof. For example, a single-qubit gate may induce a rotation of the spin state of an electron by a selectable value, e.g. $\pi/2$. A multi-qubit gate may coherently act on two or more qubits, such as a coherent CNOT operation on the state of two qubits. A plurality of quantum gates can be applied to the qubits of the quantum computer in parallel or in sequence for performing a computation. Finally, the state of the qubits may be measured repeatedly after applying a sequence of quantum gates to determine the probabilities for each possible outcome of the computation.

For example, based on a plurality of measurement results for the output states of the qubits on which the variational quantum circuit has acted determined as observables, the method may compute entries of the first low-rank matrix, and the variational parameters, parametrizing the action of the variational quantum gates of the variational quantum circuit may be updated to minimize a loss of the pre-trained machine learning model when modified based on the task-specific parameter increment $\Delta W$.

Alternatively, the variational quantum circuit may be simulated on classical hardware.

The methods may be implemented using a processing system, which may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

The variational quantum circuit may be evaluated on classical processing (simulation) resources and/or on quantum hardware, e.g. as part of training the machine learning model refined as part of the method. The processing system may comprise a server for interacting with a client device, but any processing may be distributed on a plurality of processing units, which may comprise processing units with access to quantum computation hardware.

According to a third aspect, a system for adapting a pre-trained machine learning model to a learning task is provided. The system comprises a processing system configured to receive the pre-trained machine learning model, the machine learning model comprising a plurality of learned weights for transforming an input of the machine learning model towards an output of the machine learning model, wherein the plurality of learned weights can be expressed with a weight matrix $W_0$ having a first dimension and a second dimension. The processing system is further configured to execute a training algorithm for adapting the pre-trained machine learning model based on the learning task by updating a task-specific parameter increment $\Delta W$ added to the weight matrix $W_0$ while leaving the parameters of the weight matrix $W_0$ fixed.

The task -specific parameter increment $\Delta W$ is obtained from a product of a first low rank weight matrix and a second low rank weight matrix, wherein the weights of the first low rank weight matrix are determined based on an output of a variational quantum circuit, wherein the variational quantum circuit is parametrized by a plurality of variational parameters, the variational parameters quantifying an action of variational quantum gates of the variational quantum circuit on a plurality of qubits, and wherein the output of the variational quantum circuit is obtained based on a state of the qubits after applying the variational quantum circuit. The first low rank weight matrix has the first dimension and a first low-rank dimension smaller than the second dimension, and wherein the second low rank weight matrix has the second dimension and a second low-rank dimension smaller than the first dimension, and wherein the training process updates the variational parameters of the variational quantum circuit. Alternatively, the task-specific parameter increment $\Delta W$ is constructed from a matrix product operator, MPO, representation with a plurality of tensors each having an uncontracted first index, an uncontracted second index and a contracted index of a bond dimension d, wherein a product of dimensions of the uncontracted first indices and of dimensions of the uncontracted second indices of the tensors are at least equal to the first dimension and the second dimension of the weight matrix $W_0$, respectively, and wherein entries of the tensors are trainable parameters of the training process.

The system may implement the method according to the first or second aspect or any combination of their embodiments. In particular, the system according to the second aspect may also benefit from any feature of the examples of the first aspect, and vice-versa, e.g. by obtaining entries of the tensors based on the output of a variational quantum circuit.

According to a fourth aspect, the invention relates to a computer program or non-transitory medium comprising machine-readable instruction, which, when executed by a processing system, implement a method according to the first or second aspect and/or a system according to the third aspect.

LIST OF FIGURES

In the following, a detailed description of the present disclosure and examples thereof is given with reference to the figures. The figures show schematic illustrations of

Fig. 1: a flowchart for a method for adapting a pre-trained machine learning model to a learning task according to an example of the present disclosure;

Fig. 2A: a general method of adapting a pre-trained machine learning model towards a learning task accordance with an example of the present disclosure;

Fig. 2B: an example of modeling a task-specific parameter increment $\Delta W$ with a matrix product of two low-rank weight matrices in the Penrose notation;

Fig. 2C: an example of modeling a task-specific parameter increment $\Delta W$ with a matrix product operator in the Penrose notation;

Fig. 3: a flowchart for another method for adapting a pre-trained machine learning model to a learning task according to an example of the present disclosure;

Fig. 4A: a method for adapting a machine learning model to a learning task according to an example of the present disclosure;

Fig. 4B: a method for adapting a machine learning model to a learning task according to another example of the present disclosure;

Fig. 5: example results after adapting a pre-trained machine learning model with three different fine tuning strategies.

DESCRIPTION OF EXAMPLES

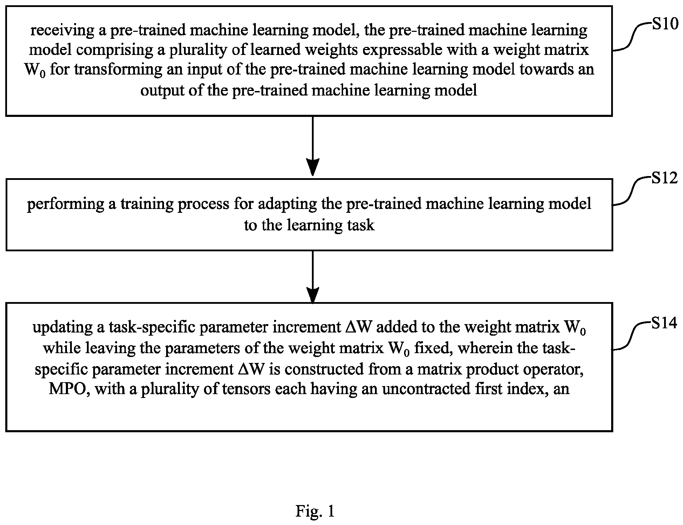

Fig. 1 schematically illustrates a flowchart for a method for adapting a pre-trained machine learning model to a learning task, which can be implemented in a processing system. The method comprises receiving the pre-trained machine learning model (S10), the pre-trained machine learning model comprising a plurality of learned weights for transforming an input of the pre-trained machine learning model towards an output of the pre-trained machine learning model, the plurality of learned weights being expressable with a weight matrix

$W_0$ having a first dimension and a second dimension. The method further comprises performing a training process for adapting the pre-trained machine learning model to the learning task (S12) by updating a task-specific parameter increment $\Delta W$ added to the weight matrix $W_0$ while leaving the parameters of the weight matrix $W_0$ fixed (S14).

The task-specific parameter increment $\Delta W$ can be configured in the form of a matrix product operator, MPO, with a plurality of tensors each having an uncontracted first index, an uncontracted second index, and a contracted index, which will be generally associated with a bond dimension d, i.e. as a common bond dimension or a maximum dimension. A product of dimensions of the uncontracted first indices and of dimensions of the uncontracted second indices of the tensors are at least equal to the first dimension and the second dimension of the weight matrix $W_0$, respectively.

The pre-trained machine learning model may be received with the learned weights constituting a layer of the machine learning model's operation, or the learned weights may bundle trainable parameters of a plurality of layers in a weight matrix or weight tensor. For adapting the machine learning model, the learned weights are however kept constant, and instead a task-specific parameter increment $\Delta W$ is added to the learned weights to adapt the machine learning model to a specific training task, which can be provided in terms of new training data and/or a loss function for grading an output of the machine learning model based on the learning task.

The task-specific parameter increment $\Delta W$ may be expandable to the dimensions of the learned weights of the pre-trained machine learning model, but the number of trainable parameters of the task-specific parameter increment $\Delta W$ may be smaller than the number of learned weights. Rather, each entry of the task-specific parameter increment $\Delta W$ may be obtainable through contraction of the plurality of tensors, and the uncontracted indices of the plurality of tensors may index each entry of the task-specific parameter increment $\Delta W$, when expressed as a matrix of the same shape as the weight matrix $W_0$. The skilled person will appreciate that the product of the dimensions of the first and second indices may be greater than the dimensions of the weight matrix $W_0$, and that the task-specific parameter increment $\Delta W$ may be constructed from a subset of the MPO, when the MPO is contracted and reshaped to a matrix shape.

The training process may comprise evaluating an output of the machine learning model with the task-specific parameter increment $\Delta W$ added to the weight matrix $W_0$, and updating the parameters of the task-specific parameter increment $\Delta W$, such that a loss function for attributing a quality to the output of the machine learning model is extremized. For example, the method may determine a gradient of the loss function parametrized by the task-specific parameter increment $\Delta W$ and may update the entries of the task-specific parameter increment $\Delta W$ based on the gradient, e.g. by determining partial derivatives of the loss function in view of the entries of the task-specific parameter increment $\Delta W$.

By iteratively training the machine learning model while updating the task-specific parameter increment $\Delta W$, the machine learning model may be adapted to the learning task. For example, trainable parameters can be iteratively updated using a feedback-loop implemented in a classical processing system, e.g. based on an (iterative) optimization algorithm, such that the output approaches an optimal solution, i.e. an optimal output given the learning task. Training the quantum circuit-based machine learning model may generally comprise determining a loss associated with an output of the machine learning model for a given input feature vector of training data based on some quality measure for the output, e.g. the mean squared error with respect to an output recorded in the problem data, and determining an update to the trainable parameters based on the loss.

However, since the number of entries in the task-specific parameter increment $\Delta W$ is smaller than the number of learned weights of the pre-trained machine learning model, the computational complexity of adapting the machine learning model can be significantly reduced. In other words, by modelling the task-specific parameter increment $\Delta W$ as a Matrix Product Operator, MPO, the number of trainable parameters during fine-tuning can be effectively reduced, while maintaining enough flexibility to adapt the model to the training data.

At the same time, the compression of the task-specific parameter increment $\Delta W$ into a Matrix Product Operator can allow for a lower count of weights than traditional LoRA-based adaption, depending on the bond dimension d.

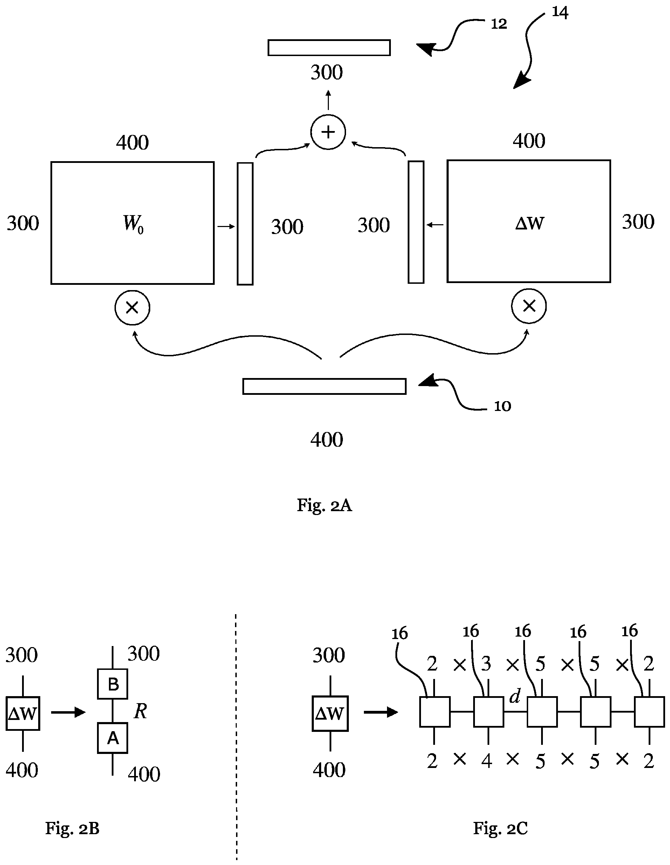

Fig. 2A illustrates a schematic example of a general method of adapting a pre-trained machine learning model towards a learning task by updating learned weights of a weight matrix $W_0$ (illustrated with a box labelled $W_0$) through the addition of a task-specific parameter increment $\Delta W$ (illustrated with a box labelled $\Delta W$) to the weight matrix $W_0$. The weight matrix $W_0$ contains the learned weights of a pre-trained machine learning model for transforming an input 10 towards an output 12 through the application of a layer 14 of the pre-trained machine learning model parametrized by the weight matrix $W_0$. The skilled person will appreciate that the machine learning model may comprise a plurality of layers 14, and the fine tuning may comprise the adaption of a plurality of weight matrices $W_0$ as part of the training process. Moreover, the adaption may be applied to any subset of weight matrices in a neural network to reduce the number of trainable parameters, e.g. only to the attention weights of a transformer model.

In the illustrated example, the layer receives an input 10 of 400 features and transforms it towards an output 12 of 300 features, with the corresponding weight matrix $W_0$ provided as a matrix with dimensions 400 and 300 (e.g. rows and columns) including entries for 120,000 learned weights.

To adapt the pre-trained machine learning model, the task-specific parameter increment $\Delta W$ may be added to the weight matrix $W_0$ and may equally be provided as a matrix with dimensions 400 and 300 (e.g. rows and columns). In conventional LoRA machine learning model adaption, the task-specific parameter increment $\Delta W$ is modeled with a matrix product of two low-rank weight matrices A and B of rank R, as illustrated in Fig. 2B with a Penrose diagram notation, with dimensions of the tensor indices given near the corresponding indices.

The rank R will generally be lower than either one of the two dimensions of the weight matrix $W_0$, and may be smaller by an order of magnitude, such as 4 or 8. As a result, the number of trainable parameters will be reduced over the adaption of all of the learned weights allowing for a reduction of computation resources and associated energy expenditure.

In contrast, the method illustrated with Fig. 1 models the task-specific parameter increment $\Delta W$ with a matrix product operator (MPO) comprising a plurality of tensors 16 of a higher dimension, e.g. 4, as illustrated in the example of Fig. 2C, also shown in Penrose diagram notation, with dimensions of the tensor indices given near the corresponding indices.

Specifically, the task-specific parameter increment $\Delta W$ for adapting the weight matrix $W_0$ is modelled with an MPO comprising five tensors 16 (illustrated with boxes) of bond dimension d, i.e. the dimension of the uncontracted indices (illustrated with horizontal bars connecting the boxes). The tensors 16 further each comprise two uncontracted indices (illustrated with open-ended vertical bars extending from the boxes in opposite directions), and a product of the dimensions of the uncontracted indices is at least equal to the dimensions of the weight matrix $W_0$.

In the illustrated example, a first dimension (lower vertical bar) and a second dimension (e.g. upper vertical bar) of the uncontracted indices of each tensor 16 are a factorization of the dimensions of the weight matrix $W_0$ (i.e. row and column dimensions, respectively). Specifically, the first uncontracted indices of the tensors 16 have dimensions of 2, 4, 5, 5, and 2, which allow for 400 combinations, corresponding to the dimension of the input 10 to the pre-trained machine learning model layer, and the second uncontracted indices of the tensors 16 have dimensions of 2, 3, 5, 5, and 2, which allow for 300 combinations, corresponding to the dimension of the input 10 to the pre-trained machine learning model layer. Thus, each index combination of the MPO may be mapped to one of the elements of the weight matrix $W_0$, such that contraction of the MPO along the contracted indices can allow for recovering the respective element. The skilled person will appreciate that the MPO may also be contracted and reshaped to obtain a matrix with dimensions which are larger than the weight matrix $W_0$, and only a subset of the larger matrix may be used as the task-specific parameter increment $\Delta W$.

In the illustrated example, the task-specific parameter increment $\Delta W$ may be modelled with $(8*d)+62*d^2$ trainable parameters, such that for an example bond dimension of d=4, the task-specific parameter increment $\Delta W$ with 120,000 entries is modelled with an MPO with 1,016 trainable parameters.

The index dimensions and the number of tensors in the MPO may be chosen based on the dimensions $d_1 \times d_2$ of the (fine-tuned) weight matrix, e.g. the row and column dimensions. One possible algorithmic construction of the MPO representation can be obtained as follows:

Factorise $$d_1 = \Pi_{i=1}^{n_1} d_1^{(i)}$$ and

$d_2 = \Pi_{i=1}^{n_2} d_2^{(i)}$ to prime numbers

[0069] Choose $k \in \{1,2\}$ corresponding for the biggest $n_k$.

Sequentially make a pairwise product of the smallest two $\{d_k^{(i)}\}$ factors and return them back into the set to equalize the number of factors for both $k$.

Sort $\{d_k^{(i)}\}$ for both $k$, such that for each $k$ the biggest factor is located in the middle of the sequence, and the other ones are sequentially placed on the left and right sides with decreasing amplitude.

Pair factors $\{d_1^{(i)}\}$ and $\{d_2^{(i)}\}$ as they are enumerated in the sets. They become uncontracted indices of $\min(n_1,n_2)$ tensors constituting the MPO.

Connect the tensors by bond indices with dimension d.

In other words, the method may comprise factorizing the first and second dimensions of the weight matrix, wherein the factorization may result in a set of prime numbers for each dimension. The number of factors in each set of factors may be equalized by multiplying the two smallest factors of the set of factors with the smaller number of factors. The set of factors may optionally be further reduced by multiplying the two smallest factors in both of the sets of factors. The result from equalizing and optionally reduced sets of factors may be considered as two ordered lists of factors which will become first and second uncontracted indices of the tensors of the matrix product operator representation, respectively. The factors of the set of factors may be sorted such that the largest factor is between smaller factors of the set, preferably in the middle of the set. Preferably, the value of the factors decreases monotonically in both directions from the center of the set of factors. As a result, the dimensions of the uncontracted indices may be greatest in the center of the matrix product operator.

The bond dimension d can be chosen arbitrarily small and then gradually increased during training in several discrete steps. For example, after a first training process with an initial bond dimension, the bond dimension may be increased and the tensors of the MPO may be filled with extra zero entries corresponding to the increment in the bond dimension. The increase in the bond dimension can be done until the validation loss of the training process decreases or saturates.

It is noted that multiple layers of a machine learning model can be modelled with the same MPO, wherein the additional layers may be introduced through an additional tensor with an uncontracted index having a dimension at least equal to the number of layers, or a plurality of additional tensors, wherein a product of the dimensions of the uncontracted indices of the additional tensors are at least equal to the number of layers to be represented with the MPO. Moreover, this scheme can be extended to multiple weight matrices, e.g. query and value matrices of a self-attention module, wherein an uncontracted index of an additional tensor indexes the respective weight matrices. In other words, multiple weight matrices may be combined to form a weight tensor, and the task-specific parameter increment may be used to construct a corresponding matrix/tensor increment. However, different layers and/or weight matrices of the pre-trained machine learning model may also be modelled with individual respective MPOs.

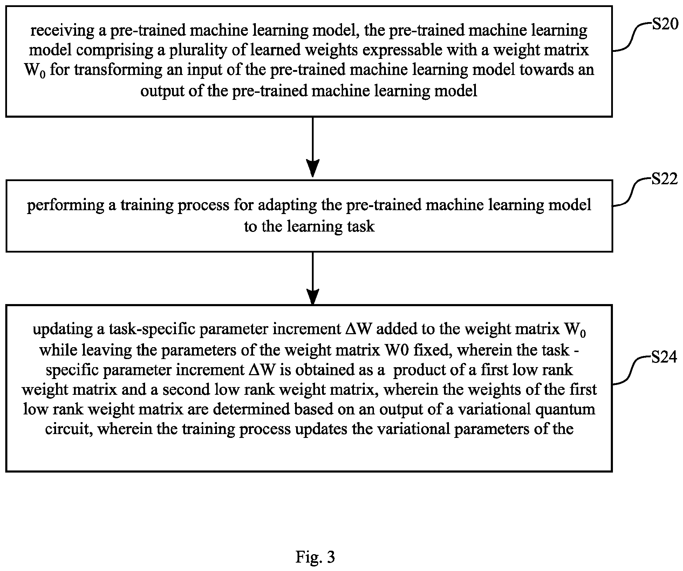

Fig. 3 schematically illustrates a flowchart for another method for adapting a pre-trained machine learning model to a learning task, which can be implemented in a processing system. The method comprises receiving the pre-trained machine learning model (S20), the pre-trained machine learning model comprising a plurality of learned weights for transforming an input of the pre-trained machine learning model towards an output of the pre-trained machine learning model, the plurality of learned weights being expressable with a weight matrix $W_0$ having a first dimension and a second dimension. The method further comprises performing a training process for adapting the pre-trained machine learning model to the learning task (S22) by updating a task-specific parameter increment $\Delta W$ added to the weight matrix $W_0$ while leaving the parameters of the weight matrix $W_0$ fixed (S24).

In the example of Fig. 3, the task -specific parameter increment $\Delta W$ is obtained as a product of a first low rank weight matrix and a second low rank weight matrix, and the weights of the first low rank weight matrix are determined based on an output of a variational quantum circuit. The variational quantum circuit is parametrized by a plurality of variational parameters, the variational parameters quantifying an action of variational quantum gates of the variational quantum circuit on a plurality of qubits, and the output of the variational quantum circuit is obtained based on a state of the qubits after the variational quantum circuit has acted on the qubits, e.g. based on a measurement result of measuring the state of the qubits. The first low rank weight matrix has the first dimension and a first low-rank dimension smaller than the second dimension, and the second low rank weight matrix has the second dimension and a second low-rank dimension smaller than the first dimension. The training process updates the variational parameters of the variational quantum circuit.

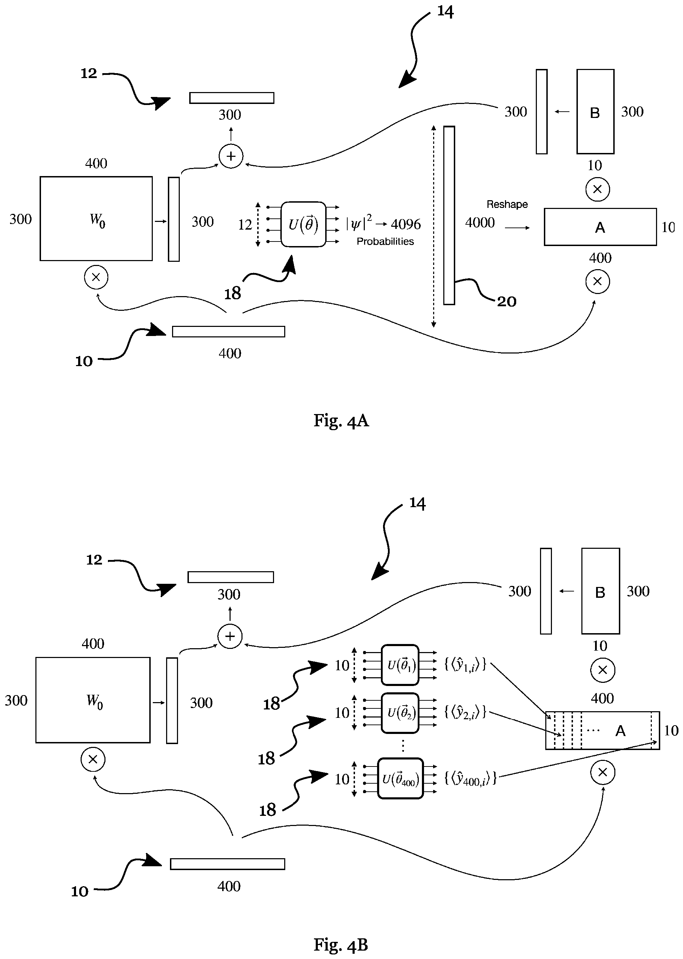

Figs. 4A and 4B illustrate two examples of methods for adapting a machine learning model to a learning task based on the method illustrated in the example of Fig. 3.

In Fig. 4A, a weight matrix $W_0$ parametrizing a layer of a pre-trained machine learning model transforms an input 10 of 400 features towards an output 12 of 300 features. For adapting the layer of the machine learning model to the learning task, a task -specific parameter increment $\Delta W$ is determined as a matrix product $\Delta W=AB$, of a first low-rank matrices A and a second low rank matrix B, as in the original proposal of the LoRA adaption, such that the effective weight matrix is given by $W=W_0+AB$. The first low-rank matrix A has a first dimension corresponding to the dimension of the input 10 (i.e. 400) and a second dimension corresponding to a rank R, while the second low-rank matrix B has a first dimension corresponding to the dimension of the output 12 (i.e. 300) and a second dimension corresponding to the rank R of the factorization of the task -specific parameter increment $\Delta W$, which is chosen as R=10 in the illustrated example.

However, in contrast to the known method of LoRA-based adaption of a task-specific parameter increment $\Delta W$, the entries of at least one of the low-rank matrices A, B are obtained from the output of a variational quantum circuit 18 acting on a plurality of qubits and being parametrizing by a plurality of variational parameters $\theta$, wherein the output can be determined based on the measured states of the qubits after the variational quantum circuit 18 acted on them. In some examples, only one of the low-rank matrices A, B is determined based on the measured output of variational quantum circuit 18, while the other one is provided as a matrix of trainable parameters. Providing one of the low-rank matrices A, B as a matrix of directly trainable parameters allows for an initialization of setting all trainable parameters in that matrix to zero, such that the training effectively starts from the original weight matrix $W_0$. The other low-rank matrix may be initialized to random weights, e.g. through selecting random variational parameters.

In the illustrated example, the low-rank matrices A with one dimension conforming to the dimension of the input 10, is obtained based on the measured output of the variational quantum circuit 18. The variational quantum circuit 18 is schematically illustrated as a quantum circuit acting on twelve (12) qubits based on the action of variational quantum gates parametrized by a vector of variational parameters $\theta$. The output states of the qubits may be (repeatedly) measured to obtain a plurality of outcome probabilities, e.g. the probabilities of measuring each computational basis state or the probabilities for each qubit to assume a certain measured outcome, such as "up" or "down".

In principle, the qubits may be measured to be in one of $2^{12}$ computational basis states, such that up to 4096 probabilities can be obtained from a single variational quantum circuit, e.g. when the variational quantum circuit 18 is simulated on classical hardware. A subset of 4000 observables may be selected to construct an output feature vector 20 and reshaped to obtain corresponding entries of the low-rank matrix A.

The skilled person will appreciate that the output state prepared after the variational quantum circuits 18 have acted on the respective sets of qubits need not be limited to the computational basis states or the probabilities of measuring each qubit in a certain state. Rather, a plurality of different observables may be obtained based on measured results of the states of the qubits, e.g. based on different measurement operators.

To adapt the pre-trained machine learning model, the variational parameters $\theta$ may be updated as part of a training algorithm, e.g. by determining a gradient of the loss function with respect to the variational parameters $\theta$. As an example, the gradient with respect to the variational parameters may be determined by executing the variational quantum circuit 18 with shifted variational parameters $\theta$ to estimate partial derivatives of the loss function with respect to the shifted variational parameters. Preferably, the number of variational parameters $\theta$ is similar to the number of observables used to construct the low rank matrix A, e.g. deviating by less than 20% from the number of observables used to construct the low rank matrix A, or smaller than the number of observables used to construct the low rank matrix A, e.g. smaller than 80% or smaller than 50% of the number of observables used to construct the low rank matrix A.

The skilled person will appreciate that the entries of the other (second) low rank matrix B may be directly updated, e.g. with the entries of the other (second) low rank matrix B considered as trainable parameters, or may alternatively be also obtained based on the output of a variational quantum circuit 18.

Although the method is illustrated with a single variational quantum circuit in Fig. 4A, the skilled person will appreciate that also a plurality of variational quantum circuits 18 may be provided, as schematically illustrated in Fig. 4B, and their respective outputs may be determined to construct corresponding pluralities of observables. Based on the observables obtained from the variational quantum circuits 18, the low rank matrix A constructed, e.g. with each entry corresponding to one of the observables of the variational quantum circuits 18.

In case a plurality of variational quantum circuits are executed to determine the entries of the low-rank matrix A, the number of variational parameters $\theta$ of all variational quantum circuits 18 (i.e. the sum) may be similar to the number of observables used to construct the low rank matrix A, e.g. deviating by less than 20% from the number of observables used to construct the low rank matrix A, or may be smaller than the number of observables used to construct the low rank matrix A, e.g. smaller than 80% or smaller than 50% of the number of observables used to construct the low rank matrix A.

The variational quantum circuits may act on a plurality of qubits based on the action of a plurality of quantum gates to perform a computation/controlled evolution, wherein variable actions of the plurality of quantum gates may be parametrized by the variational parameters $\theta$, such that a measured output of the qubits is a function of variational parameters parametrizing variable actions of the variational quantum gates, such as a rotation angle. The outcome of the computation may be obtained as part of a final state of a simulation of the quantum circuit or may be measured by a measurement sensor which projects the states of the qubits onto a measurement basis.

The measurement sensor may be a plurality of single qubit state detectors for measuring the state of each computation qubit following the evolution according to the plurality of quantum gates. Repeating the measurement may allow determining the probability of each measurement outcome and the result may be employed for determining a plurality of observables as an output of the variational quantum circuit 18.

A variational quantum circuit 18 may be evaluated repeatedly during a computation sequence. The computation sequence may comprise initializing the computation qubits before each computation, such as into the ground state of each computation qubit, e.g. to form an initial state of the computation qubits of $|00...0\rangle$. The initialization of the computation qubits into their respective ground state may in some examples comprise a relaxation process, and the initialization of the computation qubits may not require active control of the computation qubits.

A control system may then apply the plurality of quantum gates defined by the variational quantum circuit 18 to the qubits to drive a coherent evolution of the qubits. Generally, the quantum gates of the variational quantum circuit 18 will comprise entangling gates for generating superposition states of all computation qubits, e.g. by applying a Hadamard gate to each of the computation qubits, and / or by applying multi-qubit gates to the states of a plurality (e.g. two) qubits to create superposition states of multiple qubits, e.g. through the application of CNOT quantum gates.

On the basis of the measured output after the quantum gates have acted on the qubits, the control system can classically calculate an "energy"/"cost"/"loss" of the output with a cost/loss function based on a learning task. The control system may repeat the computation sequence with adjusted variable actions based on the outcome, such as to progressively improve the quality of an output label associated with the measured outcome. For example, the control system may repeat the computation sequence with adjusted operation parameters for the variational quantum gates in order to determine a gradient or energy landscape associated with the plurality of quantum gates from the measured outcomes and may update the variational parameters based on the estimated gradient in order to progressively adjust the variational quantum circuit towards an improved solution.

The Inventors found that the use of the variational quantum circuits 18 for determining the entries of at least one of the low-rank matrices A, B may introduce a sort of "quantum regularization" which may favorably reduce the effectively available space of available matrices. Specifically, it was found that the use of variational quantum circuits for determining entries of the low-rank matrices A, B may be beneficial in cases where the number of datapoints is low.

The skilled person will appreciate that the task-specific parameter increment $\Delta W$ may be multiplied with a scaling factor, such as to scale the task-specific parameter increment $\Delta W$ with respect to the original weight matrix $W_0$ of the pre-trained machine learning model, wherein the scaling factor can be introduced as a hyperparameter during the training.

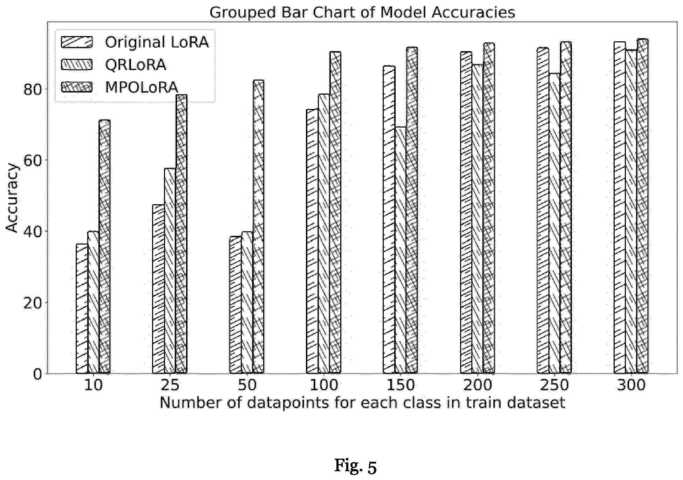

Fig. 5 illustrate example results after adapting a pre-trained machine learning model with three different strategies, the first being the original LoRA strategy ("Original LoRA"), in which the task-specific parameter increment $\Delta W$ is modelled as a product of two lower-rank matrices, a quantum regularized LoRA strategy ("QRLoRA"), which is identical to the original LoRA strategy, but the entries of the first low-rank matrix A are determined based on the output of a plurality of variational quantum circuits 18, which are parametrized by a number of variational parameters $\theta$ equal to the number of entries of the first low-rank matrix A, and a third strategy based on the modelling of the task-specific parameter increment $\Delta W$ based on a matrix product operator ("MPOLoRA"), as illustrated in the examples of Figs. 1, 2, and 2C.

The learning task selected as a task from computer vision, with the pre-trained machine learning model provided as a convolutional neural network trained on the FashionMNIST dataset, which initially contained 10 classes. The pre-training was conducted on the first 5 classes, and then the models were each fine-tuned on the remaining 5 classes. Specifically, LoRA was applied to every layer of the model, including both convolutional and linear layers. For the tests with the FashionMNIST dataset, a default convolutional network architecture was employed comprising 3 convolutional layers and 3 fully connected layers. The three convolutional layers are each fine-tuned using standard LoRA (Low-Rank Adaptation). The three linear layers, following the convolutional layers, are fine-tuned using either MPO (Matrix Product Operator), QRLoRA, or LoRA based algorithms. All experiments were conducted using the same convolutional network configuration. However, the fine-tuning was conducted on datasets of varying sizes, defined in terms of the number of datapoints for each class in the training dataset, to determine if there are any advantages when working with small datasets.

Averaging over multiple runs was used to mitigate dependency on initial parameters and ensure the robustness of the results. Additionally, hyperparameter optimization was conducted for each model to ensure optimal performance.

As can be seen from the validation accuracy of the respective models shown in Fig. 5 both proposed approaches, QRLoRA and especially MPOLoRA, outperform the original LoRA in scenarios where the training data is limited. The total number of weights used in the MPOLoRA model can be similar to or smaller than the number of weights for the Original LoRA algorithm, such that the model may still be fine-tuned with low total energy expenditure.

For example, to obtain the results in Fig. 5, the three weight matrices corresponding to the three linear layers of the of the original weight matrix $W_0$ (linear1, linear2, linear 3) are associated with 1,383,000 weights (lineari), 72,120 weights (linear2), 1,210 weights (linear3), respectively. The original LoRA algorithm with rank = 4, and a learning rate = 0.01) uses 11,616 weights (lineari), 2,880 weights (linear2), and 520 weights (linear3), respectively, to approximate the task-specific parameter increment $\Delta W$. For the QRLoRA example, the task-specific parameter increment $\Delta W$ is constructed from a similar LoRA geometry, with rank = 4 and learning rate = 0.01), with the entries of the "A" matrix obtained through a plurality of simulated variational quantum circuits, with a total number of weights for constructing each of the three layers being 11,628 weights (linear1), 2,892 weights (linear2), and 532 weights (linear3), respectively. For the MPO example, the bond dimension was chosen to be d= 15, 8 and 5 for layers linear1, linear2, and linear3, respectively, with a learning rate = 0.01. The task-specific parameter increments for each of the three layers were constructed using MPO representations with 10,872 weights (lineari), 2,516 weights (linear2), and 350 weights (linear3), respectively.

As can be seen from the example, the bond dimension of a plurality of MPOs for determining a corresponding plurality of task-specific parameter increments $\Delta W$ of different layers of a pre-trained machine learning model may be different, in particular based on (such as scaled with) the number of weights in the different layers of the pre-trained machine learning model, e.g. with a smaller bond dimension for a layer with a smaller number of weights. In some examples, the resulting total number of entries in the tensors is similar or smaller than the number of weights of a task-specific parameter increment $\Delta W$ determined using the LoRA algorithm.

The examples of the present disclosure disclosed herein only constitute specific examples for illustration purposes. The present invention can be implemented in various ways and with many modifications without altering the underlying basic properties. Therefore, the present invention is only defined by the claims as stated below.

## Claims

1. A computer-implemented method for adapting a pre-trained machine learning model to a learning task, said method comprising the steps of:

   receiving the pre-trained machine learning model, the pre-trained machine learning model comprising a plurality of learned weights for transforming an input of the pre-trained machine learning model towards an output of the pre-trained machine learning model, wherein the plurality of learned weights can be expressed with a weight matrix $W_0$ having a first dimension and a second dimension;
   performing a training process for adapting the pre-trained machine learning model to the learning task by updating a task-specific parameter increment $\Delta W$ added to the weight matrix $W_0$ while leaving the parameters of the weight matrix $W_0$ fixed,
   wherein the task-specific parameter increment $\Delta W$ is constructed from a matrix product operator, MPO, representation with a plurality of tensors each having an uncontracted first index, an uncontracted second index, and a contracted index of a bond dimension d, wherein a product of dimensions of the uncontracted first indices and of dimensions of the uncontracted second indices of the tensors are at least equal to the first dimension and the second dimension of the weight matrix $W_0$, respectively, and wherein entries of the tensors are trainable parameters of the training process.

2. The method of claim 1, wherein all entries of the tensors are trainable parameters of the training process, and/or wherein the number of trainable parameters updated in the training process is smaller than the number of learned weights.

3. The method of claim 1 or 2, wherein the number of tensors in the matrix product operator is greater than two.

4. The method of any one of the preceding claims, wherein the bond dimension is smaller than the first dimension and the second dimension by at least an order of magnitude.

5. The method of any one of the preceding claims, wherein the dimensions of the uncontracted first indices and uncontracted second indices of the tensors are a factorization of the dimensions of rows and columns of the weight matrix $W_0$, respectively; and/or
   wherein each row and each column of the weight matrix $W_0$ is mapped to a value combination for the first uncontracted indices and second uncontracted indices of the matrix product operator, MPO, respectively.

6. The method of any one of the preceding claims, wherein the first and second dimensions of the weight matrix $W_0$ correspond to row and column dimensions, respectively.

7. The method of any one of the preceding claims, wherein the weights of at least one of the tensors of the plurality of tensors are determined based on an output of a variational quantum circuit, wherein the variational quantum circuit is parametrized by a plurality of variational parameters, the variational parameters quantifying an action of variational quantum gates of the variational quantum circuit on a plurality of qubits, and the output of the variational quantum circuit is obtained based on a state of the qubits after applying the variational quantum circuit.

8. A computer-implemented method for adapting a pre-trained machine learning model to a learning task, said method comprising the steps of:

   receiving the pre-trained machine learning model, the machine learning model comprising a plurality of learned weights for transforming an input of the machine learning model towards an output of the machine learning model, wherein the plurality of learned weights can be expressed with a weight matrix $W_0$ having a first dimension and a second dimension;
   performing a training process for adapting the pre-trained machine learning model based on the learning task by updating a task-specific parameter increment $\Delta W$ added to the weight matrix $W_0$ while leaving the parameters of the weight matrix $W_0$ fixed,
   wherein the task -specific parameter increment $\Delta W$ is obtained from a product of a first low rank weight matrix and a second low rank weight matrix, wherein the weights of the first low rank weight matrix are determined based on an output of a variational quantum circuit, wherein the variational quantum circuit is parametrized by a plurality of variational parameters, the variational parameters quantifying an action of variational quantum gates of the variational quantum circuit on a plurality of qubits, and wherein the output of the variational quantum circuit is obtained based on a state of the qubits after applying the variational quantum circuit,
   wherein the first low rank weight matrix has the first dimension and a first low-rank dimension smaller than the second dimension, and wherein the second low rank weight matrix has the second dimension and a second low-rank dimension smaller than the first dimension, and wherein the training process updates the variational parameters of the variational quantum circuit.

9. The method of claim 8, wherein the method comprises obtaining a plurality of outputs of a corresponding plurality of variational quantum circuits with different variational parameters, and wherein the plurality of outputs are combined to form the first low rank weight matrix.

10. The method of claim 8 or 9, wherein the number of qubits is equal to the first low-rank dimension of the first low-rank weight matrix.

11. The method of any one of claims 8 to 10, wherein the second low rank weight matrix is initialized to all zeros; and/or wherein entries of the second low rank weight matrix are trainable parameters of the training.

12. The method of any one of claims 8 to 11, wherein the first dimension is the dimension of the input.

13. The method of any one of claims 8 to 12, wherein the method comprises executing the variational quantum circuit on quantum hardware.

14. A system for adapting a pre-trained machine learning model to a learning task comprising a processing system configured to:

receive the pre-trained machine learning model, the machine learning model comprising a plurality of learned weights for transforming an input of the machine learning model towards an output of the machine learning model, wherein the plurality of learned weights can be expressed with a weight matrix $W_0$ having a first dimension and a second dimension;
execute a training algorithm for adapting the pre-trained machine learning model to the learning task by updating a task-specific parameter increment $\Delta W$ added to the weight matrix $W_0$ while leaving the parameters of the weight matrix $W_0$ fixed,
wherein the task -specific parameter increment $\Delta W$ is obtained from a product of a first low rank weight matrix and a second low rank weight matrix, wherein the weights of the first low rank weight matrix are determined based on an output of a variational quantum circuit, wherein the variational quantum circuit is parametrized by a plurality of variational parameters, the variational parameters quantifying an action of variational quantum gates of the variational quantum circuit on a plurality of qubits, and wherein the output of the variational quantum circuit is obtained based on a state of the qubits after applying the variational quantum circuit, wherein the first low rank weight matrix has the first dimension and a first low-rank dimension smaller than the second dimension, and wherein the second low rank weight matrix has the second dimension and a second low-rank dimension smaller than the first dimension, and wherein the training process updates the variational parameters of the variational quantum circuit; or
wherein the task-specific parameter increment $\Delta W$ is constructed from a matrix product operator, MPO, representation with a plurality of tensors each having an uncontracted first index, an uncontracted second index and a contracted index of a bond dimension d, wherein a product of dimensions of the uncontracted first indices and of dimensions of the uncontracted second indices of the tensors are at least equal to the first dimension and the second dimension of the weight matrix $W_0$, respectively, and wherein entries of the tensors are trainable parameters of the training process.

15. A computer program comprising machine readable instructions, which when the computer program is executed by a processing unit cause the processing unit to implement a method according to any one of claims 1-13 and/or to implement a system according to claim 14.

receiving a pre-trained machine learning model, the pre-trained machine learning model comprising a plurality of learned weights expressable with a weight matrix $W_0$ for transforming an input of the pre-trained machine learning model towards an output of the pre-trained machine learning model ⌐S10

performing a training process for adapting the pre-trained machine learning model to the learning task ⌐S12

updating a task-specific parameter increment $\Delta W$ added to the weight matrix $W_0$ while leaving the parameters of the weight matrix $W_0$ fixed, wherein the task-specific parameter increment $\Delta W$ is constructed from a matrix product operator, MPO, with a plurality of tensors each having an uncontracted first index, an ⌐S14

Fig. 1

Fig. 2A

Fig. 2B

Fig. 2C

receiving a pre-trained machine learning model, the pre-trained machine learning model comprising a plurality of learned weights expressable with a weight matrix $W_0$ for transforming an input of the pre-trained machine learning model towards an output of the pre-trained machine learning model ⟋S20

performing a training process for adapting the pre-trained machine learning model to the learning task ⟋S22

updating a task-specific parameter increment $\Delta W$ added to the weight matrix $W_0$ while leaving the parameters of the weight matrix W0 fixed, wherein the task - specific parameter increment $\Delta W$ is obtained as a product of a first low rank weight matrix and a second low rank weight matrix, wherein the weights of the first low rank weight matrix are determined based on an output of a variational quantum circuit, wherein the training process updates the variational parameters of the ⟋S24

Fig. 3

**12**

300

400

300 | $W_0$ | 300

$\times$

400

**10**

$\times$

**14**

300 | ← | B | 300

**10**

$\times$

12 $U(\vec{\theta})$ $|\psi|^2 \rightarrow 4096$
Probabilities

**18**

Reshape

$4000 \rightarrow$

A | 10

400

$\times$

**20**

Fig. 4A

**12**

300

400

300 | $W_0$ | 300

$\times$

**10**

400

**14**

300 | ← | B | 300

**10**

$\times$

400

10 $U(\vec{\theta}_1)$ $\{\langle \hat{y}_{1,i} \rangle\}$

**18**

10 $U(\vec{\theta}_2)$ $\{\langle \hat{y}_{2,i} \rangle\}$

**18**

10 $U(\vec{\theta}_{400})$ $\{\langle \hat{y}_{400,i} \rangle\}$

**18**

$\cdots$ A | 10

$\times$

Fig. 4B

Fig. 5

Europäisches Patentamt

European Patent Office

Office européen des brevets

# EUROPEAN SEARCH REPORT

**Application Number**

EP 24 19 0729

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Hu Edward ET AL: "LORA: Low-Rank Adaptation of Large Language Models", , 16 October 2021 (2021-10-16), pages 1-26, XP093239488, Retrieved from the Internet: URL:https://arxiv.org/abs/2106.09685 [retrieved on 2025-01-15] * the whole document * | 1-15 | INV. G06N3/0464 G06N3/084 G06N3/096 G06N10/60 |
| A | Chen Zhuo ET AL: "QuanTA: Efficient High-Rank Fine-Tuning of LLMs with Quantum-Informed Tensor Adaptation", , 31 May 2024 (2024-05-31), pages 1-28, XP093239493, Retrieved from the Internet: URL:https://arxiv.org/abs/2406.00132 [retrieved on 2025-01-15] * Abstract, 1. Introduction, 4. Preliminary: Quantum circuit, 5. Quantum-informed tensor adaptation * | 1-15 | |
| A | LIU PEIYU ET AL: "Enabling Lightweight Fine-tuning for Pre-trained Language Model Compression based on Matrix Product Operators", PROCEEDINGS OF THE 59TH ANNUAL MEETING OF THE ASSOCIATION FOR COMPUTATIONAL LINGUISTICS AND THE 11TH INTERNATIONAL JOINT CONFERENCE ON NATURAL LANGUAGE PROCESSING (VOLUME 1: LONG PAPERS), 4 June 2021 (2021-06-04), pages 1-11, XP093239486, DOI: 10.18653/v1/2021.acl-long.418 * Abstract, 3. Preliminary, 4. Approach * | 1-7,14, 15 | |

**TECHNICAL FIELDS SEARCHED (IPC)**

G06N

-/--

The present search report has been drawn up for all claims

| Place of search | Date of completion of the search | Examiner |
|---|---|---|
| The Hague | 21 January 2025 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

**Application Number**

EP 24 19 0729

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIU PEIYU ET AL: "Enhancing Scalability of Pre-trained Language Models via Efficient Parameter Sharing", FINDINGS OF THE ASSOCIATION FOR COMPUTATIONAL LINGUISTICS: EMNLP 2023, 1 January 2023 (2023-01-01), pages 1-15, XP093239492, DOI: 10.18653/v1/2023.findings-emnlp.920 * Abstract, 3. Method * ----- | 1-7,14, 15 | |
| A | GAO ZE-FENG ET AL: "Compressing deep neural networks by matrix product operators", PHYSICAL REVIEW RESEARCH, vol. 2, no. 2, 1 June 2020 (2020-06-01), XP093239739, College Park, US ISSN: 2643-1564, DOI: 10.1103/PhysRevResearch.2.023300 * Abstract, I. Introduction, II. Method * ----- | 1-7,14, 15 | |
| A | Hasan Mohammad Junayed ET AL: "Bridging Classical and Quantum Machine Learning: Knowledge Transfer from Classical to Quantum Neural Networks using Knowledge Distillation", , 23 November 2023 (2023-11-23), pages 1-19, XP093239728, Retrieved from the Internet: URL:https://arxiv.org/abs/2311.13810 [retrieved on 2025-01-15] * Abstract, 1. Introduction, 3. Methodology * ----- | 8-15 | **TECHNICAL FIELDS SEARCHED (IPC)** |

The present search report has been drawn up for all claims

| Place of search | Date of completion of the search | Examiner |
|---|---|---|
| The Hague | 21 January 2025 | Moro Pérez, Gonzalo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

        .......................................................................................

& : member of the same patent family, corresponding
    document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HU et al.** *LORA: Low-Rank Adaptation of Large Language Models*

- **TER-MANOVA et al.** *Tensor Quantum Programming*